# EUROPEAN PATENT APPLICATION

(11) **EP 1 736 918 A1**
(43) Date of publication of application: **27.12.2006**
(21) Application number: 06001059.2
(22) Date of filing: 18.01.2006
(51) Int. Cl.: G06Q 10/00

(54) **Usage status notification system**

(30) Priority: 10.06.2005 JP 2005170720
(71) Applicant: FUJI XEROX CO., LTD., Minato-ku, Tokyo (JP)
(72) Inventor: Yoshioka, Takeshi, Ashigarakami-gun Kanagawa (JP); Yamada, Toshiya, Ashigarakami-gun Kanagawa (JP); Shibata, Hirohito, Ashigarakami-gun Kanagawa (JP); Ikeda, Hitoshi, Ashigarakami-gun Kanagawa (JP); Fukui, Motofumi, Ashigarakami-gun Kanagawa (JP)
(74) Representative: Grünecker, Kinkeldey, Stockmair & Schwanhäusser Anwaltssozietät

(57) **Abstract**

A usage status notificationmanagement apparatus includes a user management unit, a document registration management unit, a recommendation processing unit, a recommendation history management unit and a usage status processing unit. The recommendation processing unit provides to a user terminal at least a part of document information of documents registered in the document registration management unit as a recommendation document, based on a predetermined condition. The recommendation history management unit keeps and manages a recommendation processing history about the document information of the recommendation documents. The usage status processing unit generates the usage status based on document information of a document, which has been prepared using each recommendation document, based on a recommendation relation between the recommendation documents recorded in the recommendation processing history and identity of at least partial contents between documents having the recommendation relation.

## Description

The entire disclosure of Japanese Patent Application No.2005-170720 including the specification, claims, drawings and abstract is incorporated herein by reference in its entirety

### BACKGROUND OF THE INVENTION

### 1. Field of the Invention

The invention relates to a technique for recommending a registered document to other users in order to promote use, and particularly to a technique for notifying an owner user of document information of a document, which has been prepared using his/her registered document.

### 2. Description of the Related Art

Using a user terminal such as a desktop computer or a mobile computer, processing in which documents stored in memory of the user terminal or documents acquired through a network is displayed on a screen and is browsed has been performed.

In such processing of browsing documents, processing for searching for and acquiring a document, which a user wants to brows, from memory, a data server and a Web site has been performed.

A typical information search method uses a search keyword explicitly entered by a user to search for document information of a document, which contains the keyword or to which the keyword is attached as an index, and outputs the document information as a search result.

However, in such an information search method, it is required that the user prepares a search query using the search keyword explicitly entered by the user, gives search instructions, and find out a necessary document from the obtained search result.

On the other hand, an information recommendation technique in which a user does not prepare a search query and document information relating to a certain document information is automatically searched based on the certain document information and is presented to the user has come to attention.

In recent years, application of the information recommendation technique in the Internet shopping (recommendation of related goods using a buying history) or news delivery service (presentation of the past news relating to a news article) has attracted attention. In addition, development of the information recommendation technique in knowledge management or utilization of corporate memory in cooperation with a document archive system has attracted attention.

For example, JP Hei.10-269237, "Improving Proactive Information Systems" (FXPALBar, ACM IUI 2005) and "Margin Notes: Building a Contextually Aware Associative Memory" (Margin Notes, ACM IUI 2000) disclose a system in which a feature word is extracted from content text of a Web page browsed by a Web browser, and documents of the related contents are automatically searched using the extracted feature word, from a particular database and is supplied to a user terminal. Name and summary of the document, which is a search result, and search keywords are displayed and juxtaposed to a Web page being browsed, presented in another window or presented as a list followed from a menu of an application.

Also, JP Hei.11-272680 has proposed an invention in which in the case of performing processing for presenting a search result of document data, fact information represented among a group of documents of the search result in common is extracted, a required amount of information is selected from the common fact information, a summary sentence of the common fact information is generated, an amount of usage of information is calculated and accounting is calculated based on the amount of usage to perform the accounting processing.

### SUMMARY OF THE INVENTION

In the information recommendation systems described above, a recommendation document is decided by the systems based on the degree of similarity with respect to the contents of a Web page, which a user is browsing. However, the information recommendation systems described above have not performed processing for feeding back to an owner user (a person who has registered the recommendation document or who has created the recommendation document) a status in which his/her document is recommended to another user and is used in preparing another document by the other user.

Therefore, the owner user of the recommendation document cannot confirm to what extent other persons reuse the document, which is created or registered for the purpose of recommendation processing, so that there arises a problem that the owner user cannot check usefulness of his/her document.

The invention has been made in view of the above-described circumstances, and notifies a usage status of a document, which has been registered for the purpose of the recommendation processing to an owner user of the document so that the owner user can know how another users use his/her document.

If the owner knows the status of the usage of his/her documents, an owner user will be able to understand the usefuleness of the document and then to obtain new knowledge from documents created by other persons by notifying the owner user of document information of the documents created by the other persons and also enables the owner user to monitor unauthorized use of his/her works.

The invention is based on, for example, the following idea. Based on recommendation processing history information as to whether or not a document recommended by a system is recommended to other users (including organizations or groups to which the users belong, in the invention) in the past, when the recommended document is used in a newly created document by other users through conversion or citation, document information of the documents newly created by the other users are notified to an owner user of the recommended document. Thereby, the owner user is given information for determining how much his/her document is useful to the other users. Also, the owner user can grasp a usage status of his/her document. Thereby, the owner user can seize an opportunity for obtaining new knowledge from the documents created by the other users and take copyright protection measures against unauthorized plagiarism.

Here, the owner user in the invention may be a user who registers a document created by another person or a user who creates a document registered by another person as well as a user who registers by himself/herself his/her created document (a user who creates and registers a document). In brief, the owner user is a user who owns or manages a document, which is created or registered.

For example, according to one embodiment of the invention, when a user browses a Web page by a Web browser of a user terminal, another document relating to contents of the Web page being browsed is automatically searched from a particular database and document information (for example, identification information, URL or actual data of the found document) of the found document is supplied to the user terminal as a recommendation document and is presented to the user. Then, the fact that a document has been recommended and the fact that the recommendation document is accessed by a user who is recommended the recommendation document as described above are kept and managed as the recommendation processing history. Users who have been recommended a document of a particular owner user are specified, identity of at least partial contents between documents created by these users and the recommendation document is determined, and the owner user is notified of document information of a document meeting the identity.

Specifically, the invention is implemented by various forms such as a usage status notification system, a management apparatus forming the usage status notification system, a user terminal forming the usage status notification system, a program implementing the management apparatus by a computer, and a method performed by the usage status notification system.

According to one embodiment of the invention, a usage status notification system, which with regard to a document registered to be available to another user, notifies to an owner user of the registered document in terms of a usage status based on document information of a document which uses the owner user' s registered document. The usage status notification system includes a user terminal operated by a user and a management apparatus that notifies a usage status. The management apparatus includes a user management unit, a recommendations history management unit, a recommendation processing unit and a usage status processing unit. The user management unit acquires identification information of a user who operates the user terminal, from the user terminal. The document registration management unit registers document information of documents with the documents information of the documents associated with identification information of owner users of the documents, respectively. The recommendation processing unit provides to the user terminal at least a part of the document information of the documents registered in the document registration management unit as a recommendation document, based on a predetermined condition. The recommendation history management unit keeps and manages a recommendation processing history about the document information of the recommendation documents. The usage status processing unit provides the usage status based on the document information of a document, which has been prepared using each recommendation document, to the owner user of each recommendation document, based on a recommendation relation between the recommendation documents recorded in the recommendation processing history and identity of at least partial contents between documents having the recommendation relation. The user terminal includes an output processing unit that outputs information based on the document information provided from the management apparatus.

Here, documents information relating to registration, recommendation or creation may be actual data of a document or information - with which a user can identify the document and access the actual data of the document - such as a document ID, a document name, and a document URL.

An owner user may register document information of his/her document in the document registration management unit using the user terminal, with the document information of his/her document associated with his/her identification information. Alternatively, an owner user may input information, which associates the document information of his/her document with his/her identification information, using another device.

Also, the document registration management unit may be configured so that a functional part for associating the identification information of the owner user with the document information and storing both the information is separated from a functional part for registering new document information into an external database and that the function part, which is disposed in the management apparatus, for registering may perform registration processing into the storing function part provided as the external database.

Also, as a method for selecting a recommendation document from among registered documents (that is, the predetermined condition), various methods may be adopted such as a method for randomly making selection and recommendation or a method for making selection and recommendation according to attributes of users such as sex or age. Preferably, a document relating to a document, which a user who is to be given document information of a recommendation document browses using a user terminal, is searched from a set of registered documents and is recommended.

The searching for a recommendation document relating to a browsed document can be performed by various methods publicly known. Typically, the searching is performed by document search processing for extracting distinctive words from contents of the browsed document such using the TF/IDF score and using the extracted distinctive words as search keywords or processing for searching a document containing a distinctive word similar to the extracted distinctive word. In addition, a table, which associates plural related documents with identification information, may be prepared in advance and a related recommendation document may be searched from identification information of the browsed document.

Also, in the methods described above, the management apparatus acquires document information of the browsed document from the user terminal. This acquired document information of the browsed document depends on the search processing methods of the recommendation document. For example, in the search processing method for extracting distinctive words from a browsed document, actual data of the document may be acquired as the document information of the browsed document, and in the search processing method using the associating table, identification information of the browsed document may be acquired as the document information of the browsed document.

According to the above-described configuration, an owner user is notified of information, which is used by other persons, so that the owner user can grasp how much his/her document is useful to the other persons. Furthermore, the owner user can be given an opportunity for obtaining new knowledge from documents created by other persons. Also, the owner user can be given information for monitoring plagiarism of his/her document.

### BRIEF DESCRIPTION OF THE DRAWINGS

Fig. 1 is a configuration diagram of a usage status notification system according to one embodiment of the invention.
Fig. 2 is a diagram describing a recommendation processing history according to one embodiment of the invention.
Fig. 3 is a diagram describing an example displayed on a screen according to one embodiment of the invention.
Fig. 4 is a diagram describing a method for instructing displaying usage information according to one embodiment of the invention.
Fig. 5 is a diagram describing an example of usage information displayed on a screen according to one embodiment of the invention.
Fig. 6 is a diagram describing generation processing of the usage information according to one embodiment of the invention.
Fig. 7 is a diagram describing an example of the usage information displayed on the screen according to one embodiment of the invention.
Fig. 8 is a diagram describing an example of the usage information displayed on the screen according to one embodiment of the invention.

### DETAILED DESCRIPTION OF EMBODIMENTS OF THE INVENTION

The invention will be described concretely based on one embodiment.

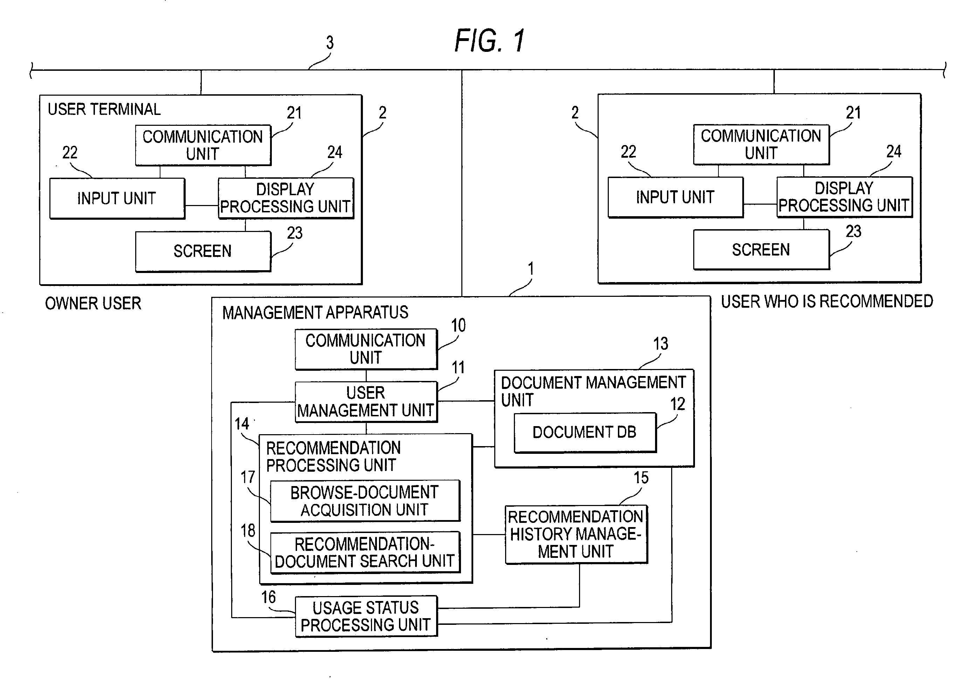

Fig. 1 shows a usage status notification system according to one example of the invention. In the system of this example, a management apparatus 1 functioning as a document source is connected to a plurality of user terminals 2 through a network 3.

In the example, the document source is built into the management apparatus 1, but the document source provided with the management apparatus 1 may be a document database or a Web site connected to the network.

The user terminals 2 are apparatuses, which are used by an owner user who has registered his/her document in the management apparatus 1 so as to be available to other users and the other users who are recommended the document of the owner user by the management apparatus 1 and use it. Incidentally, in the example, when a particular user creates a new document using (for example, reusing a part of the contents) a recommendation document, the created document is registered in the management apparatus 1 together with information indicating that the user who has created the document is an owner user of the created document, and will be recommended to other users.

The user terminal 2 has a communication unit 21 for conducting network communication, an input unit 22 for receiving an operation input from a user, a screen 23 for displaying information about a document to present the information to a user, and a display processing unit 24 for performing processing for displaying the information about the document on the screen.

In the system of the example, when a user gives browse instructions involving document specification from the input unit 22, the user terminal 2 acquires a specified document from the network 3 by means of a Web browser function of the display processing unit 24 and displays the acquired document on the screen 23.

Incidentally, in the example, the recommendation documents are acquired from the document database 12 in the management apparatus 1. However, for example, various documents provided on the Internet through an internet service provider may also be acquired using various search methods by invoking the internet service by the management apparatus 1.

The management apparatus 1 manages each of the user terminals 2 by receiving log-in information from the user terminals 2.

The management apparatus 1 includes a communication unit 10 for conducting network communication, a user management unit 11, a document management unit 13, a recommendation processing unit 14, a recommendation history management unit 15 and a usage status processing unit 16. The user management unit 11 acquires identification information (a name and an ID, in the example) of a user who operates the user terminal 2, from the user terminal 2 together with the log-in information, document information of a browsed document and document information of a registered document. The document management unit 13 stores document information (a name and a document ID combined with a URL in the example) of documents registered from an owner user (user terminal 2) in the document database 12 with the document information of the documents associated with identification information (a user ID and a name in the example) of owner users of the documents, respectively. The recommendation processing unit 14 recommends to the user terminal 2 through which a document is browsed, document information (a name and a document ID combined with a URL in the example) of documents relating to the browse document. The recommendation history management unit 15 keeps and manages a recommendation processing history about document information of the recommendation documents. The usage status processing unit 16 provides document information of a document, which is created using the recommendation document, to the owner user (user terminal 2) of the recommendation document through the communication unit 10 based on a recommendation relation between the recommendation documents recorded in the recommendation processing history of the recommendation history management unit 15 and identity of at least partial contents between documents having the recommendation relation.

The recommendation processing unit 14 has a browse-document acquisition unit 17 and a recommendation-document search unit 18. The browse-document acquisition unit 17 acquires the document information (actual data of the browsed data in the example) of the document being browsed by the user terminal 2. The recommendation-document search unit 18 searches the document database 12 for a document relating to contents of the acquired browsed document as a recommendation document based on degree of similarity between feature words extracted from the documents.

Therefore, when a document is displayed on the screen 23 and is browsed in the user terminal 2 under management of the management apparatus 1, the management apparatus 1 sends document information of the recommendation documents relating to the browsed document to the browsing user terminal 2.

Also, in the user terminal 2, when, for example, a recommendation document list is displayed on the screen 23 based on the document information of the received recommendation documents and a browsing user selects a desired document URL in the list by operating the input unit 22, the selected information is sent to the management apparatus 1 and data of the recommendation document is sent from the document database 12 to the browsing user terminal 2 and is displayed on the screen 23.

That is, the management apparatus 1 sequentially manages which user terminal 2 (browsing user) is recommended which document and whether or not the browsing user accesses the recommendation document.

Also, in the example, the browsing user can access a recommendation document URL, acquire the data of the recommendation document from the management apparatus 1 and create a new document by the user terminal 2 by means of, for example, reusing a part of contents of the recommendation document. Then, the created document is sent from the user terminal 2 to the management apparatus 1 together with user identification information, which indicates that the browsing user is an owner user of the created document and is attached to the created document. The created document is registered in the document database 12 as a recommendation processing target together with registration time information.

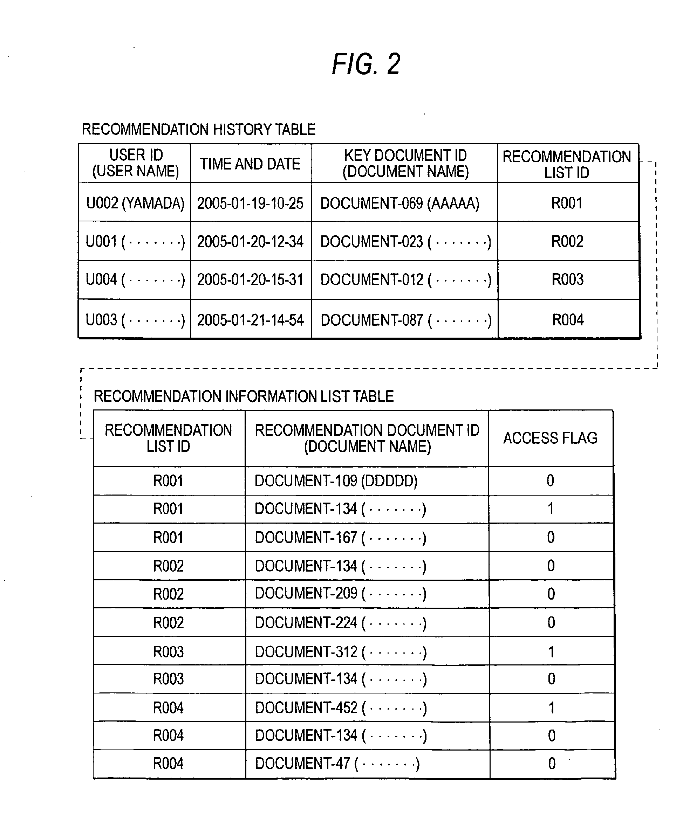

Also, the recommendation history management unit 15 of the example stores the recommendation processing history including document information (name and URL) of recommendation documents information and information about presence or absence of access as shown in Fig. 2 whenever processing for recommending a related document to the user terminal 2 is performed.

Incidentally, as described above, when the user terminal 2 accesses the recommendation document through the network 3, the management apparatus 1 detects information about time and date of the access and information about the presence or absence of the access, which are to be included in the recommendation processing history, and the recommendation history management unit 15 keeps and manages those information.

Also, the usage status processing unit 16 of the example determines whether or not the document recommended to the user and the document, which is created by the user and registered in the document database 12, contain identical description part. When the identical description part is contained in the both document, the usage status processing unit 16 generates information (for example, document name, a paragraph containing the identical description part and/or information for graph display as described below) of the created document and sent the created information through the communication unit 10 to an owner user (user terminal) of the recommendation document.

Here, functional means of the management apparatus 1 and the user terminal 2 of the example is implemented by a computer, which executes a program according to this example. However, the functional means of the management apparatus 1 and the user terminal 2 may be implemented by a dedicated circuit function.

As shown in Fig. 2, the recommendation processing history kept and managed by the recommendation history management unit 15 includes a recommendation history table and a recommendation information list table, which are associated with each other through "recommendation list ID" as shown in Fig. 2. The recommendation history table associates "a user ID (user name) who is recommended", "information about the time and date at which access or recommendation was made" and "an ID (URL) or a name of a browsed document (key document), which is a recommendation source". The recommendation information list table associates "an ID (URL) or a name of a recommendation document" and "an access flag indicating whether or not a recommendation document is accessed by a user terminal."

Incidentally, a query, which is information associating each recommendation document with a corresponding key document, is also recorded in the recommendation processing history.

The fact that, for example, when a user (Yamada) with a user ID of "U002" was browsing a document "Document-069" at 10:25, January 19, 2005, three documents "Document-109, 134, 167" were recommended, and the recommendation document "Document-134" among them was accessed and browsed is recorded in the recommendation history management unit 15 as the recommendation processing history.

Identification information of a user who operates a user terminal, information about time at which access to a document or recommendation of a document was made, identification information of a browsed document (key document), which is a ground for recommendation processing of a related document, identification information of a recommendation document and information about the presence or absence of access to a recommendation document are associated with each other and are recorded and managed in the recommendation processing history.

In the recommendation information list table, the "access flag" are provided for each document in each recommendation. Number of accesses to each recommendation document can be obtained by calculating sum of the flag "1" indicating that the recommendation document has been accessed.

Furthermore, if a recommendation document is set as a key in the recommendation processing history, a user who was recommended the recommendation document or accessed the recommendation document, time and date at which the recommendation document was recommended or accessed can be specified. Also, a browsed document (key document), which is a ground for recommending such a document, can be specified.

Therefore, as described later, an owner user can be notified when a key document, which the owner user has registered in the document database 12, was recommended to whom, based on the recommendation processing history. Furthermore, a user who accessed the registered document can be specified and a document, which the user newly created and registered in the document database 12 as a key document, can be specified.

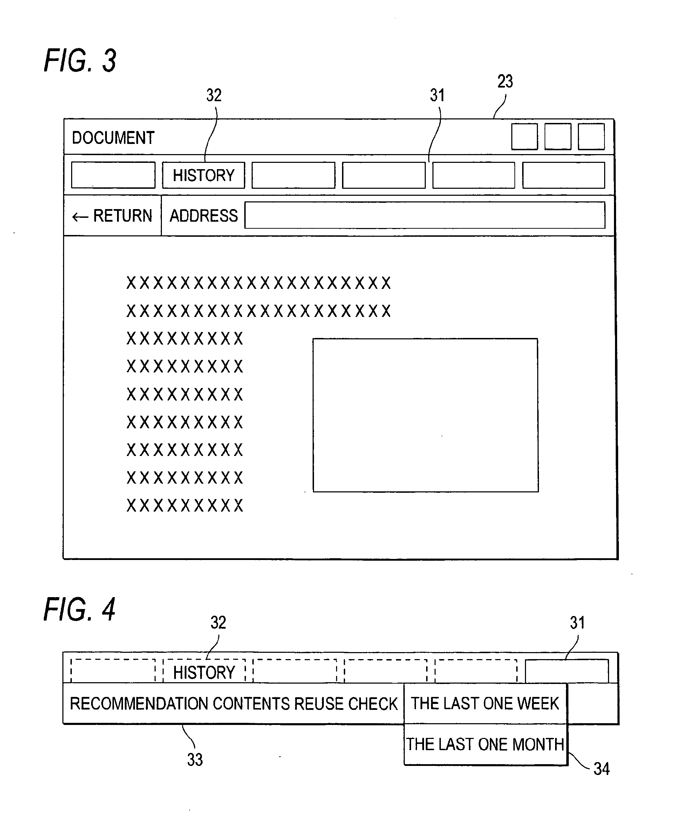

Fig. 3 shows the screen 23 of the user terminal 2. In the example, a "history" button 32 for allowing an owner user to view a usage status relating to his/her document, which the owner user has registered in the document database 12, is provided in a tool bar 31 on the screen 23.

When the owner user clicks the "history" button 32, for example, a "recommendation contents reuse check" menu 33 is displayed on the screen as shown in Fig. 4. The "recommendation contents reuse check" is a menu for displaying on the screen information about a document, which has been created using a key document registered by the owner user, based on the recommendation processing history recorded in the recommendation history management unit 15.

Then, when the "recommendation contents reuse check" menu is selected, a period menu 34 used for viewing information about reuse such as "the last one day" or "the last one week" is displayed. For example, when the owner user selects "the last one week," the selected information is input to the management apparatus 1. With regard to registered documents of the owner user, information about a document, which has been created using any of the registered documents based on recommendation within a period going back one week from the present point in time is notified from the management apparatus 1 and is displayed on the screen 23 by the display processing unit 24.

Incidentally, in the case of selecting the "recommendation contents reuse check" menu, an owner user inputs his/her user ID from the input unit 22 and sends the user ID to the management apparatus 1. Thereby, the management apparatus 1 performs processing for specifying a reuse document and a recommendation processing history about the documents registered by the owner user.

Also, in the example described above, the owner user is notified of information about reuse, based on the operation as described above by the owner user. However, the management apparatus 1 may automatically notify each owner user of the reuse information every set period.

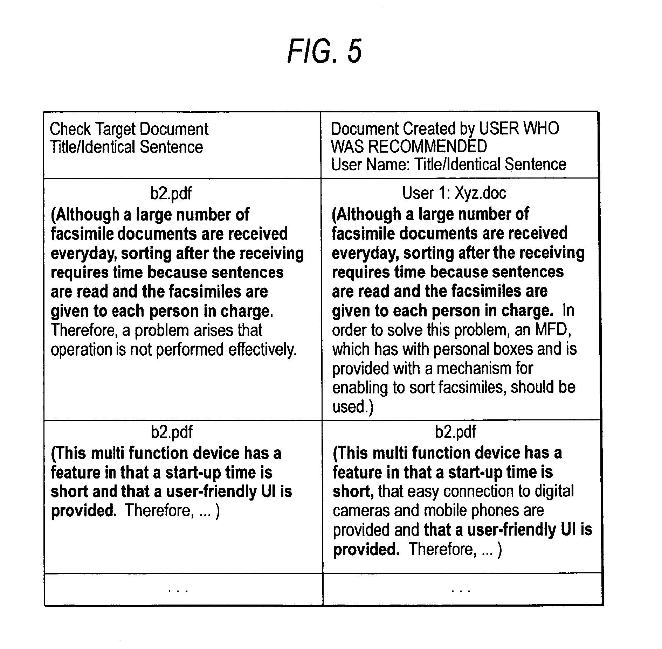

Fig. 5 shows one example of information of a reuse document displayed on the screen 23 of the user terminal 2.

Incidentally, an example will be described in which the owner user who registered his/her documents in the document database 12 acquires reuse information from the management apparatus 1 by means of a Web browser function of the user terminal 2 to display the reuse information on the screen 23. However, various methods such as printing output as well as displaying on the screen may be used in outputting the reuse information so long as the owner user can understand contents of the reuse information.

In the illustrated example, in response to selecting a menu of "the last one week" by an owner user, the usage status processing unit 16 searches the recommendation processing history of the recommendation history management unit 15 for a recommendation processing history and a registration history into the document database 12 in the past one week from the present time in terms of a document (a document name "b2.pdf" in the illustrated example) registered by the owner user. Of users who upon being recommended a key document of the owner user, accessed the key document, a user who has registered a document having identical description part with the key document is specified. Then, name of the specified user and description part data having the identity are sent to the user terminal 2 of the owner user so that the description part data, having the identity, of the document registered by the specified user is highlighted.

As a result, in the user terminal 2 of the owner user, the key document (check target document) and the documents (document created by the user who was recommended) , which other users have created and registered using the key document are juxtaposed and are displayed on the screen with being associated with each other as shown in Fig. 5. That is, with respect to the check target document, description parts used in the document created by the other users are displayed together with its title (b2.pdf). With respect to the documents created by the user who was recommended, names (User1, User2) of the users who created the documents and description parts, which were created using the key document are displayed. Identical description portions are highlighted in the description parts of both these documents.

Incidentally, in the identity determination processing described above, a difference may be extracted in the units of sentence using a technique such as mdiff described in a reference "NLP using diff - Use of convenient tool for detecting differences, MDIFF-" (Journal of Natural Language processing Vol.9, No.2, pp.91-110) to juxtapose and display the extracted difference.

The notification processing of the reuse information as described above is mainly performed by the usage status processing unit 16. A document created using a recommendation document is registered in the document database 12 of the management apparatus 1 and will be recommended to other users. That is, the recommendation processing is repeatedly performed and a sequence (that is, propagation of a key document) of documents created by a recommendation relation is formed. The propagation relation can be revealed by tracing the recommendation processing history.

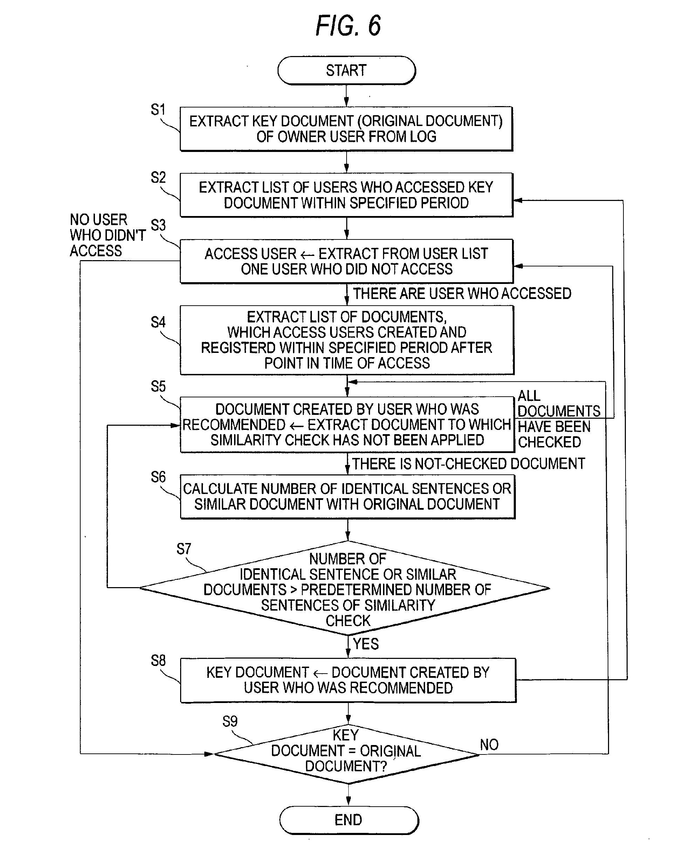

Fig. 6 shows one example of a processing procedure in which the usage status processing unit 16 extracts such propagation relation information.

First, with respect to a key document, which has been registered in the document database 12 by an owner user who attempts to make a check of reuse, a log of recommendation processing is extracted from the recommendation processing history 15 (step S1). All the users who accessed the recommended key document within a period specified by the owner user are extracted and listed (Hereafter, access check list) (step S2). Selecting a user(hereafter, access user) in the access check list, who has not check the access. When all users in the access check list have been checked, move to Step S9. (step S3).

All documents, which the access user created and registered in the document database 12 within the specified period, are extracted and listed (step S4). Processing for making a similarity (that is, identity) check between each of the listed registered documents with the key document is performed (step S5). When all documents extracted in Step S4 are checked, move to Step S3.

Description contents of each registered document are compared with those of the key document (original document) and the number of identical sentences or similar sentences between each registered document and the key document is calculated (step S6). For example, the similarity of the sentences is calculated by the number or rate of the words which are used in both sentences. When the number of identical sentences or similar sentences is equal to or larger than predetermined number, it is determined that a registered document has been created using the key document. Also, the registered document having a use relation with the key document is set as a new key document, and the processing is repeated from the processing of step S2 (step S8). Then move Step S2, and detecting a new user list at Step S2. If key document is original document, move to end. If not, move Step S5.

That is, a propagation relation in which another document created using the key document is set as a new key document and still another document is further created using the new key document can be revealed as well as a document user.

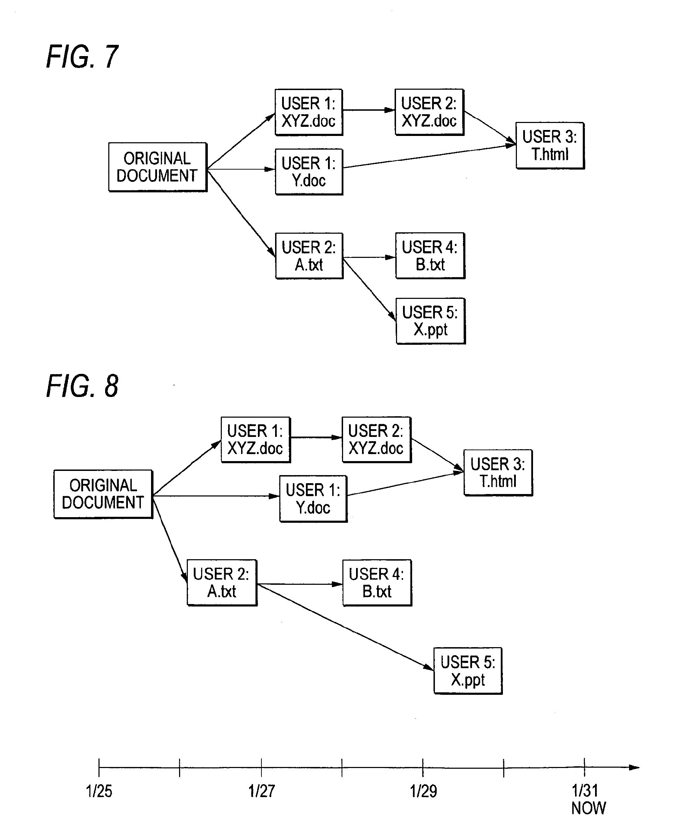

Fig. 7 shows one example in which a propagation relation between documents is displayed on the screen 23 of the user terminal.

In the present example, an original document (B2.pdf); documents (XYZ.doc) (Y.doc) of a first user (Userl) and a document (A.txt) of a second user (User2), which have been created using the original document; a document (XYZ.doc) of the second user (User2), which has been created using the document (XYZ.doc) of the first user (Userl); a document (B.txt) of a fourth user (User4) and a document (X.ppt) of a fifth user (User5), which have been created using the document (A.txt) of the second user (User2); and a document (T.html) of a third user (User3), which has been created using the document (XXZ.doc) of the second user (User2) and the document (Y.doc) of the first user (User1) are respectively represented as nodes. These nodes are displayed in a graph format with being connected by links showing respective use relations between the nodes.

Incidentally, in the example, each of the links is displayed in a form in which the thickness is varied according to the degree of use between the documents (for example, the number of similar sentences described above).

Also, as shown in Fig. 8, time elapsed from registration of the original document to registration of each use document may be represented by varying a length of a link. Also, the elapsed time may be displayed.

The usage status processing unit 16 generates information used to display such a graph by performing the determination processing of the propagation relation as described above, and sends the generated information to the user terminal 2.

Here, the acquiring a document browsed by the user terminal 2 may be performed by a method for acquiring document data by scanning papers on which a document browsed by the user terminal 2 is printed may be used or may be performed by a method for acquiring Web page data to acquire document electronic data .

Also, with regard to whether or not a recommendation document is used, for example, the user terminals may check based on edit processing history stored therein whether or not a recommendation document is edited, and when the edit has been performed, the user terminals may notify the fact to the management apparatus.

Also, as a notificationmethod of usage status information, the usage status information may be notified to a particular address of an owner user by electronic mail.

## Claims

1. A usage status notification management apparatus, which with regard to a document registered to be available to another user, notifies to an owner user of the registered document a usage status based on document information of a document which uses the owner user's registered document, the usage status notification management apparatus comprising:
a user management unit that acquires identification information of a user who operates a user terminal, from the user terminal;
a document registration management unit that registers document information of documents with the documents information of the documents associated with identification information of owner users of the documents, respectively;
a recommendation processing unit that provides to the user terminal at least a part of the document information of the documents registered in the document registration management unit as a recommendation document, based on a predetermined condition;
a recommendation history management unit that keeps and manages a recommendation processing history about the document information of the recommendation documents; and
a usage status processing unit that generates document information of a document, which has been prepared using each recommendation document, based on a recommendation relation between the recommendation documents recorded in the recommendation processing history and identity of at least partial contents between documents having the recommendation relation, the usage status processing unit that provides the usage status based on the document information to the owner user of each recommendation document.

2. The usage status notificationmanagement apparatus according to claim 1, wherein the recommendation processing unit determines the recommendation document on a basis of document information of a document, which is being browsed by the user terminal.

3. The usage status notification management apparatus according to any one of claims 1 and 2, wherein the usage status processing unit provides the document information of the document, which has been prepared using each recommendation document, to the owner user of each recommendation document, based on that the documents having the recommendation relation there between contain the same description part.

4. The usage status notification management apparatus according to any one of claims 1 to 3, wherein the document information of the document, which has been prepared using each recommendation documents, is information enabling the user terminal to display an identical description portion contained in both of each recommendation document and the document, which has been prepared using each recommendation documents, to be distinguishable.

5. The usage status notification management apparatus according to any one of claims 1 to 4, wherein:
the document registration management unit stores the document information of the document, which has been prepared using each recommendation documents, with associating identification information of a user who has prepared the document using each recommendation document as identification information of an owner user with the document information of the document, which has been prepared using each recommendation documents, and
the usage status processing unit supplies information enabling the user terminal to output a sequence of documents, which have been prepared using the recommendation documents, in a graph form in which the document information of the documents are placed in nodes and relations between the documents are used as links, based on a recommendation relation between the recommendation documents recorded in the recommendation processing history as a result of repetition of the recommendation processings and identity of at least partial contents between the documents having the recommendation relation.

6. The usage status notification management apparatus according to claim 5, wherein the usage status processing unit provides information, which represents degree of usage between the documents by varying a form of the links.

7. The usage status notification management apparatus according to any one of claims 1 to 6, wherein:
the recommendation processing history managed by the recommendation history management unit includes at least one of information about time at which the recommendation processing unit provides the recommendation document to the user and information about time at which the document registration management unit registers the document information of the documents, and
the usage status processing unit provides document information of a document, which has been prepared using each recommendation document within a predetermined period designated by the owner user of each recommendation document, to the owner user of each recommendation document, based on the recommendation relation between the recommendation documents recorded in the recommendation processing history and the identity of the at least partial contents between the documents having the recommendation relation.

8. A usage status notification system, which with regard to a document registered to be available to another user, notifies to an owner user of the registered document a usage status based on document information of a document which uses the owner user's registered document, the usage status notification system comprising:
a user terminal operated by a user; and
a management apparatus that notifies a usage status, wherein:
the management apparatus comprises:
a user management unit that acquires identification information of a user who operates the user terminal, from the user terminal;
a document registration management unit that registers document information of documents with the documents information of the documents associated with identification information of owner users of the documents, respectively;
a recommendation processing unit that provides to the user terminal at least a part of the document information of the documents registered in the document registration management unit as a recommendation document, based on a predetermined condition;
a recommendation history management unit that keeps and manages a recommendation processing history about the document information of the recommendation documents; and
a usage status processing unit that provides the usage status based on the document information of a document, which has been prepared using each recommendation document, to the owner user of each recommendation document, based on a recommendation relation between the recommendation documents recorded in the recommendation processing history and identity of at least partial contents between documents having the recommendation relation; and
the user terminal comprises an output processing unit that outputs information based on the document information provided from the management apparatus.

9. A storage medium readable by a computer, the storage medium storing a program of instructions executable by the computer to perform a function of a usage status notification management apparatus, which with regard to a document registered to be available to another user, notifies to an owner user of the registered document a usage status based on document information of a document, which uses the owner user' s registered document, the function comprising:
acquiring identification information of a user who operates a user terminal, from the user terminal;
registering document information of documents with the documents information of the documents associated with identification information of owner users of the documents, respectively;
providing to the user terminal at least a part of the registered document information of the documents as a recommendation document, based on a predetermined condition;
keeping and managing a recommendation processing history about the document information of the recommendation documents;
generating document information of a document, which has been prepared using each recommendation document, based on a recommendation relation between the recommendation documents recorded in the recommendation processing history and identity of at least partial contents between documents having the recommendation relation; and
providing the usage status based on the document information to the owner user of each recommendation document.

10. A user terminal forming a usage status notification system which with regard to a document registered to be available to another user, notifies to an owner user of the registered document a usage status based on document information of a document, which uses the owner user' s registered document, the usage status notification management apparatus comprising:
a user management unit that acquires identification information of a user who operates a user terminal, from the user terminal;
a document registration management unit that registers document information of documents with the documents information of the documents associated with identification information of owner users of the documents, respectively;
a recommendation processing unit that provides to the user terminal at least a part of the document information of the documents registered in the document registration management unit as a recommendation document, based on a predetermined condition;
a recommendation history management unit that keeps and manages a recommendation processing history about the document information of the recommendation documents; and
a usage status processing unit that provides the usage status based on document information of a document, which has been prepared using each recommendation document, to an owner user of each recommendation document, based on a recommendation relation between the recommendation documents recorded in the recommendation processing history and identity of at least partial contents between documents having the recommendation relation,
the user terminal comprises:
an output processing unit that outputs information based on the usage status provided from the management apparatus

11. A usage status notification method, which with regard to a document registered to be available to another user, notifies to an owner user of the registered document a usage status based on document information of a document, which uses the owner user's registered document, the usage status notification method comprising:
registering document information of documents with the documents information of the documents associated with identification information of owner users of the documents, respectively;
providing at least a part of the document information of the documents registered in the document registration management unit as a recommendation document, based on a predetermined condition;
keeping and managing a recommendation processing history about the document information of the recommendation documents; and
providing the usage status based on document information of a document, which has been prepared using each recommendation document, to an owner user of each recommendation document, based on a recommendation relation between the recommendation documents recorded in the recommendation processing history and identity of at least partial contents between documents having the recommendation relation.
